# EUROPEAN PATENT APPLICATION

(11) **EP 2 204 883 A1**
(43) Date of publication of application: **07.07.2010**
(21) Application number: 08846086.0
(22) Date of filing: 30.09.2008
(51) Int. Cl.: H01Q 1/50, H01Q 1/24, H04B 1/38, H04M 1/00, H04M 1/02

(54) **PORTABLE WIRELESS DEVICE**

(30) Priority: 31.10.2007 JP 2007284329
(71) Applicant: Panasonic Corporation, Kadoma-shi Osaka 571-8501 (JP)
(72) Inventor: AOKI, Kouta, Osaka 540-6207 (JP); ASAHINA, Toshihiro, Osaka 540-6207 (JP)
(74) Representative: Grünecker, Kinkeldey, Stockmair & Schwanhäusser Anwaltssozietät
(86) International application number: PCT/JP2008/002730
(87) International publication number: WO 2009/057243

(57) **Abstract**

A mobile radio apparatus improves the flexibility of the layout design of an antenna and a radio circuit by arranging the antenna and the radio circuit for supplying power to the antenna in separate housings and realizes a smaller apparatus size. In this apparatus, a first housing (110) that accommodates an antenna element (114), antenna power feeding section (116) and a first circuit substrate (118) and a second housing (150) that has a second circuit substrate (152) on which a radio circuit section (154) is mounted, are coupled to be rotatable around a hollow rotation axis part (130). A group of a plurality of thin linear coaxial wires (170) that electrically connects the first circuit substrate (118) and the second circuit substrate (152) is inserted through the rotation axis part (130). At least one of thin linear coaxial wires (172) of thin linear coaxial wire group (170) is used as a power feeding line that electrically connects an antenna power feeding section (116) and a radio circuit (152).

## Description

### Technical Field

The present invention relates to a flip mobile radio apparatus.

### Background Art

Conventionally, inmobile radio apparatuses such as flip mobile telephones, the first housing, which is provided with a display section with a liquid crystal display panel, and the second housing, in which the operation keys used to input telephone numbers and send and receive electronic mail are arranged, are provided foldably.

It is known that, in such a flip mobile radio apparatus, the antenna and antenna power feeding section are arranged on the first housing side, rather than in the second housing which is generally held, taking into account the influence of the user's hand, and power is supplied from a radio transmitting/receiving circuit arranged on the second housing side, through a coaxial cable (see Patent Document 1).

With a configuration where power is supplied from the radio transmitting/receiving circuit arranged in the second housing to the antenna arranged in the first housing, the coaxial cable is arranged across both housings along the direction in which the first housing and the second housing open, or is arranged along the outer surface of the hinge part that connects both housings rotatably. Further, a flexible substrate that connects the substrates provided in the first housing and the second housing is arranged in a location completely different from the coaxial cable.
Patent Document 1: Japanese Patent Application Laid-Open No.2006-325152

### Disclosure of Invention

### Problems to be Solved by the Invention

Recently, the increase in CPU processing speed and the advancement in radio communication techniques have made apparatuses smaller, thinner and lighter, and various wireless applications such as digital television (i.e. one-segment broadcasting) and GPS functions are mounted in the apparatuses. In response to these wireless applications, it is necessary to provide a plurality of radio circuits and antennas, and, to realize smaller and thinner apparatuses, there is a demand to improve the flexibility of the layout of antennas and radio circuits in the housings of a mobile radio apparatus.

However, conventional mobile radio apparatuses separately require a dedicated coaxial cable to communicate between the antenna in the first housing and the radio transmitting/receiving circuit in the second housing, apart from the signal line connecting the substrates. Therefore, due to a dedicated connector for connecting the coaxial cable with the substrates, the footprint on the substrates decreases and space in the housings required to arrange the signal line and the coaxial cable increases, thereby making it difficult to make the mobile radio apparatus smaller.

It is therefore an object of the present invention to provide a mobile radio apparatus that can improve the flexibility of the layout design of an antenna and a radio circuit and save space by arranging the antenna and the radio circuit for supplying power to the antenna in separate housings.

### Means for Solving the Problem

The mobile radio apparatus according to the present invention employs a configuration which includes: a first housing that has: an antenna element; a power feeding section that feeds power to the antenna element; and a first circuit substrate; a second housing that has a second circuit substrate on which a radio circuit section is mounted; a hollow rotation axis part that is electrically conductive and that couples the first housing and the second housing rotatably; an electrically conductive connecting member that electrically connects at least one of ground patterns of the first and second circuit substrates with the rotation axis part; and a plurality of thin linear coaxial wires that are inserted through the rotation axis part and that electrically connect the first circuit substrate and the second circuit substrate, and in which at least one of the thin linear coaxial wires is a power feeding line that electrically connects the power feeding section and the radio circuit.

Further, the mobile radio apparatus according to the present invention employs a configuration which includes: a first housing that has: an antenna element; a power feeding section that feeds power to the antenna element; and a first circuit substrate; a second housing that has a second circuit substrate on which a radio circuit section is mounted; a coupling housing that is arranged between the first housing and the second housing; a hinge part that couples the second housing and the coupling housing to be rotatable about a first axis center; a hollow rotation axis part that is electrically conductive and that couples a first coupling body which is fixed to the coupling housing and a second coupling body which is fixed to the first housing, to be rotatable about a second axis center which is vertical with respect to the first axis center; an electrically conductive connecting member that electrically connects at least one of ground patterns of the first and second circuit substrates with the rotation axis part; and a plurality of thin linear coaxial wires that are inserted through the rotation axis part and that electrically connect the first circuit substrate and the second circuit substrate through the coupling housing, and at least one of the thin linear coaxial wires is a power feeding line that electrically connects the power feeding section and the radio circuit.

### Advantageous Effect of the Invention

According to the present invention, it is possible to improve the flexibility of the layout design of an antenna and a radio circuit and save space by arranging the antenna and the radio circuit for supplying power to the antenna in separate housings.

### Brief Description of Drawings

FIG.1 is a schematic view showing a main configuration of a mobile radio apparatus according to Embodiment 1 of the present invention;
FIG.2 is a schematic view showing a main configuration of the mobile radio apparatus according to Embodiment 1 of the present invention;
FIG.3 is a schematic view showing a main configuration of the mobile radio apparatus according to Embodiment 2 of the present invention;
FIG.4 is a schematic view showing a main configuration of the mobile radio apparatus according to Embodiment 2 of the present invention;
FIG.5 is a schematic view showing a modified example of the mobile radio apparatus according to Embodiment 2 of the present invention;
FIG. 6 is a schematic view showing a modified example of the mobile radio apparatus according to Embodiment 2 of the present invention;
FIG.7 is a schematic view showing a main configuration of the mobile radio apparatus according to Embodiment 3 of the present invention;
FIG.8 is a schematic view showing a main configuration of the mobile radio apparatus according to Embodiment 3 of the present invention;
FIG.9 is an outlook view showing the operation of opening the mobile radio apparatus according to Embodiment 3 of the present invention;
FIG.10 is an outlook view showing the operation of closing the mobile radio apparatus according to Embodiment 3 of the present invention;
FIG.11 is an outlook view showing the operation of opening the mobile radio apparatus according to Embodiment 3 of the present invention;
FIG.12 shows the second hinge part in the mobile radio apparatus shown in FIG.10;
FIG.13 shows the second hinge part in the mobile radio apparatus shown in FIG.11;
FIG.14 is a schematic view showing a main configuration of the mobile radio apparatus according to Embodiment 4 of the present invention;
FIG.15 is a schematic view showing a main configuration of the mobile radio apparatus according to Embodiment 4 of the present invention;
FIG. 16 shows the relationship between a metal plate and the second hinge part with an axis part in the mobile radio apparatus according to Embodiment 4 of the present invention;
FIG.17 is an exploded view showing an interior of the first housing;
FIG.18 is a schematic view showing an example of a main configuration of the mobile radio apparatus with a plurality of antenna elements; and
FIG.19 is a schematic view showing an example of a main configuration of the mobile radio apparatus with a plurality of antenna elements.

### Best Mode for Carrying Out the Invention

Embodiments of the present invention will be explained in detail below with reference to the accompanying drawings.

### (Embodiment 1)

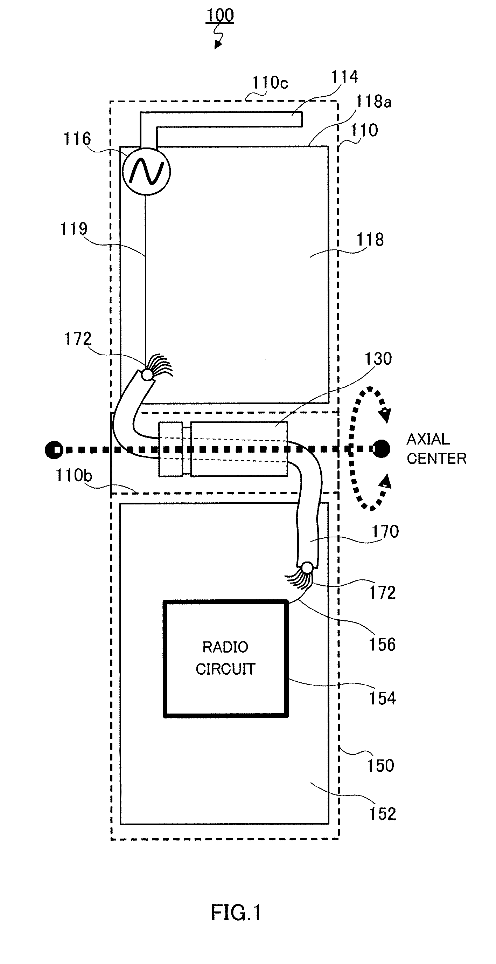

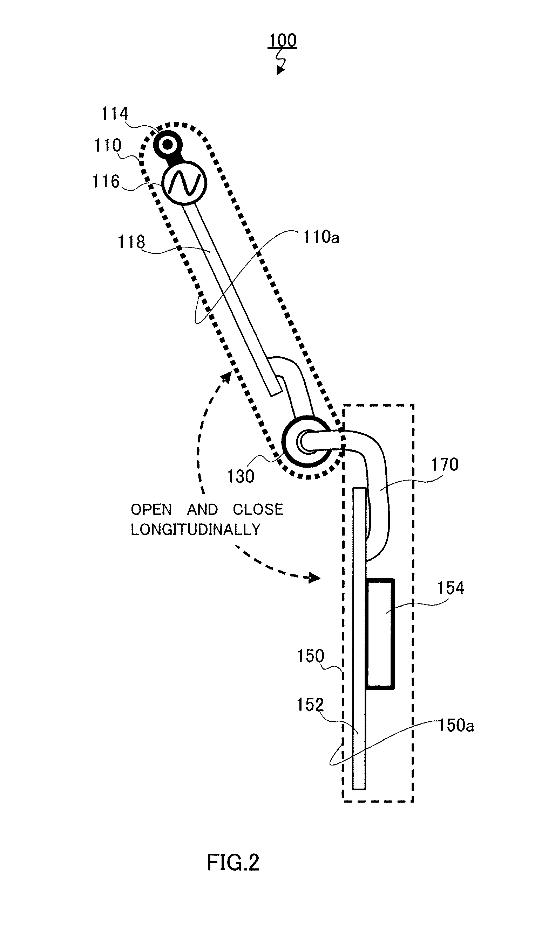

FIG.1 and FIG.2 are schematic views showing main configurations of mobile radio apparatus 100 according to Embodiment 1 of the present invention. FIG. 1 is a front view of the mobile radio apparatus and FIG.2 is a right side view of the mobile radio apparatus.

Mobile radio apparatus 100 shown in FIG.1 and FIG.2 has first housing 110 and second housing 150 to which first housing 110 is attached foldably through rotation axis part 130.

FIG.1 and FIG.2 show states of mobile radio apparatus 100 where first housing 110 rotates about rotation axis part 130 to open in the longitudinal direction with respect to second housing 150. In this open state, first housing 110 is arranged on second housing 150 from a plan view and is arranged inclining upward from the surface of second housing 150.

First housing 110 has a long rectangular shape from a plan view, and base side part 110b of first housing 110 is attached rotatably with a portion of one side part of surface 150a of second housing 150, through hollow rotation axis part 130 extending in the width direction. Here, the hollow rotation axis part is made of an electrically conductive member.

Further, surface 110a of first housing 110 is provided with a liquid crystal display (not shown), and is rotated around rotation axis part 130, is folded and faces surface 150a of second housing 150.

First housing 110 accommodates antenna element 114 and first circuit substrate 118 on which antenna power feeding section 116 is mounted and wiring pattern 119 is formed.

Antenna element 114 is arranged in first housing 110 along side part 110c (i.e. upper side part in FIG. 1) parallel to base side part 110b coupled to second housing 150 through the hinge part, and one end of antenna element is connected with antenna power feeding section 116 in first circuit substrate 118. Power (i.e. high frequency voltage) is supplied to antenna element 114 through this antenna power feeding section 116.

First circuit substrate 118 is arranged virtually parallel to the surface of first housing 110 and antenna power feeding section 116 is mounted in side part 118a in the front end. Further, it is also possible to connect the ground of first circuit substrate 118 with an electrically conductive member formed in first housing 110.

Antenna power feeding section 116 is arranged on first circuit substrate 118 and is connected with one end of thin linear coaxial wire 172 of thin linear coaxial wire group 170 through wiring pattern 119 wired on first circuit substrate 118. Further, wiring pattern 119 wired on first circuit substrate 118 may be formed with a microstrip line. This wiring pattern 119 is formed extending in the longitudinal direction in first circuit substrate 118 arranged in first housing 110, and is connected with one thin linear coaxial wire 172 of thin linear coaxial wire group 170 inserted through rotation axis part 130 on the side of the base side part 110b of first circuit substrate 118.

Thin linear coaxial wire group 170 is formed with a plurality of thin linear coaxial wires of the same radius, and, mainly, connects first circuit substrate 118 of first housing 110 and second circuit substrate 152 of second housing 150 to communicate power supply signals and electrical signals for operating the circuit functions implemented in the circuit substrates of first circuit substrate 118 and second circuit substrate 152. Here, one of thin linear coaxial wires 172 of thin linear coaxial wire group 170 is used to feed power to the antenna.

Thin line coaxial wire 172 for feeding power to the antenna that is connected with antenna power feeding section 116 is arranged spaced apart from the thin linear coaxial wires, which serve as signal lines for specific frequencies (for example, clock signals for liquid crystal displays), to prevent deterioration of wireless performance. Further, this thin linear coaxial wire 172 for feeding power is arranged adjacent to the ground line connected with the ground of the first and second circuit substrates. For example, a plurality of thin linear coaxial wires are arranged like a plate by aligning them in a direction orthogonal to the direction in which thin linear coaxial wire group 170 extends, and these plates are arranged two-tiered, thereby connecting thin linear coaxial wire group 170 with second circuit substrate 152 and radio circuit 154. Thin linear coaxial wire 172 positioned in the end of a plurality of thin linear coaxial wires is the thin linear coaxial wire for feeding power to the antenna and the thin linear coaxial wire adjacent to the thin linear coaxial wire for feeding power to the antenna is the ground line. Further, it is preferable to use the thin linear coaxial wire arranged at the position farthest from the thin linear coaxial wire for feeding power to the antenna, as the signal line for a specific frequency.

Further, a structure is possible where the individual outer conductors of thin linear coaxial wire group 170 and thin linear coaxial wires 172 are connected with one electrically conductive member, have uniform potential and are connected with the substrate ground through this electrically conductive member.

Thin linear coaxial wire group 170 configured in this way is inserted through the hollow axis part in rotation axis part 130, is arranged across first housing 110 and second housing 150 and the other end of thin linear coaxial wire 172 for feeding power to the antenna is electrically connected with radio circuit 154 of second circuit substrate 152.

On the other hand, second housing 150 accommodates second circuit substrate 152 virtually parallel to the surface and radio circuit 154 is mounted in this second circuit substrate 152.

Radio circuit 154 is connected with each electronic component mounted in second circuit substrate 152 and is connected with each electronic component mounted on first circuit substrate 118 through thin linear coaxial wire group 170, and has radio transmitting/receiving functions and the like.

Particularly, radio circuit 154 is connected with the other end of thin linear coaxial wire 172 connected with wiring pattern 119 in thin linear coaxial wire group 170 through wiring pattern 156 wired on second circuit substrate 152, and supplies power (i.e. high frequency current) to antenna power feeding section 116 through thin linear coaxial wire 172.

Further, wiring pattern 156 wired on second circuit substrate 152 may be formed with a microstrip line.

In mobile radio apparatus 100 configured in this way, thin linear coaxial wire group 170 is inserted through rotation axis part 130 to connect first circuit substrate 118 of first housing 110 and second circuit substrate 152 of second housing 150. Consequently, thin linear coaxial wire group 170 does not twist due to the opening and closure of first housing 110 and second housing 150.

Further, one thin linear coaxial wire in thin linear coaxial wire group 170 is used as thin linear coaxial wire 172 for feeding power to the antenna, and, consequently, it is not necessary to bridge between first housing 110 and second housing 150 a coaxial cable for feeding power to the antenna as a separate line from the signal line connecting first circuit substrate 118 and second circuit substrate 152, so that it is possible to make the hollow part in rotation axis part 130 smaller.

Further, the individual outer conductors of thin linear coaxial wire group 170 and thin linear coaxial wires 172 are connected through electrically conductive member, thereby making their potentials uniform and are connected with the ground, so that it is possible to improve connection with the ground and reduce loss of a specific frequency.

Consequently, because antenna 114 and radio circuit 154 for supplying power to the antenna 114 are arranged in first housing 110 and second housing 150, respectively, which are foldable through rotation axis part 130, it is possible to design the layout easily without arranging antenna 114 and radio circuit 154 in the same housing.

That is, by arranging an antenna and a radio circuit for supplying power to the antenna in separate housings, it is possible to improve the flexibility of the layout design of the antenna and the radio circuit and save space.

Consequently, it is possible tomake first housing 110 and second housing 150 lighter and smaller.

### (Embodiment 2)

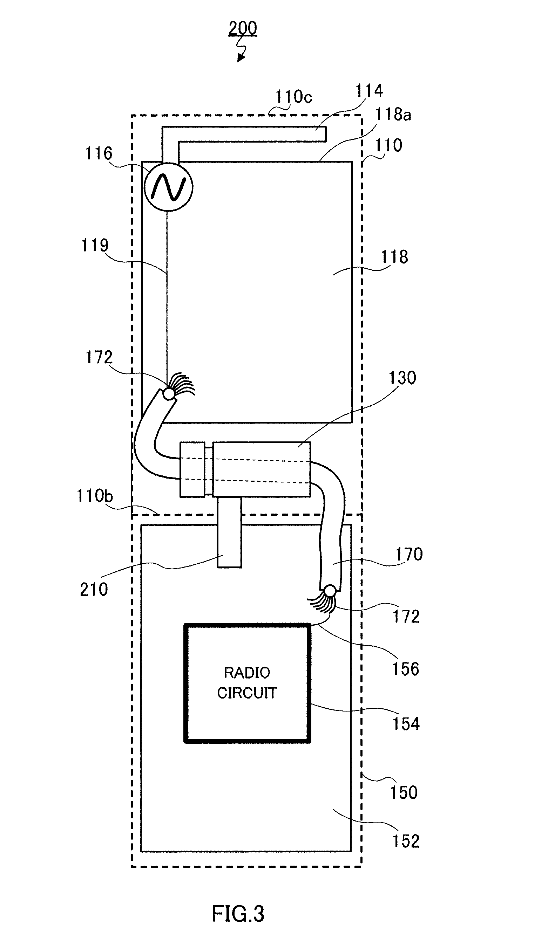

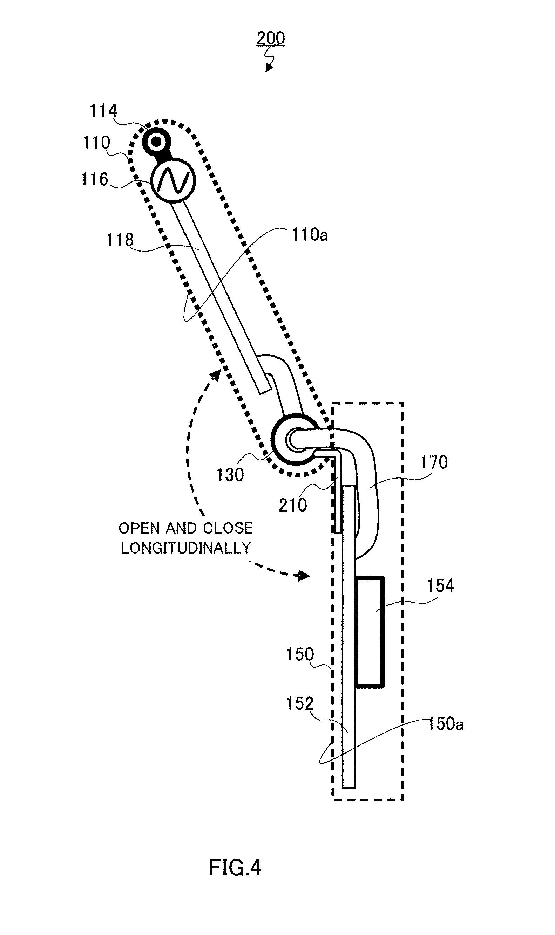

FIG.3 and FIG.4 are schematic views showing main configurations of mobile radio apparatus 200 according to Embodiment 2 of the present invention. FIG.3 is a front view of the mobile radio apparatus and FIG.4 is a right side view of the mobile radio apparatus. Further, mobile radio apparatus 200 of this Embodiment 2 has the same basic configuration as corresponding mobile radio apparatus 100 of Embodiment 1 shown in FIG. 1, and the same components will be assigned the same reference numerals and explanation thereof will be omitted.

In addition to the configuration of mobile radio apparatus 100, mobile radio apparatus 200 shown in FIG.3 and FIG.4 further has connecting member 210 that electrically connects second circuit substrate 152 and rotation axis part 130, through which thin linear coaxial wire group 170 is inserted.

That is, first housing 110 and second housing 150 are attached foldably and rotatably, and hollow rotation axis part 130, through which thin linear coaxial wire group 170 is inserted, is electrically connected with second circuit substrate 152 of second housing 150 through electrically conductive connecting member 210.

Connecting member 210 is made of a spring, metal sheet and the like and is bridged between rotation axis part 130 and second circuit substrate 152 to electrically connect the rotation axis part 130 with the ground pattern on second circuit substrate 152.

To be more specific, the supporting part that supports rotation axis part 130 on the second housing 150 side is formed as a hollow member communicating with the interior of second housing 150, and, in this hollow part, one end of connecting member 210 is jointed to the outer surface of rotation axis part 130 and the other end is electrically connected with the ground pattern on second circuit substrate 152.

By this means, mobile radio apparatus 200 of Embodiment 2 provides the same advantage as mobile radio apparatus 100 of Embodiment 1 and cylindrical rotation axis part 130 surrounding the periphery of thin linear coaxial wire group 170 serves as the ground, so that it is possible to reduce noise emitted from thin linear coaxial wire group 170.

Further, although mobile radio apparatus 200 of Embodiment 2 employs a configuration where rotation axis part 130 is electrically connected with the ground of second circuit substrate 152 arranged in second housing 150 through connecting member 210 in the configuration of mobile radio apparatus 100, the present invention is not limited to this.

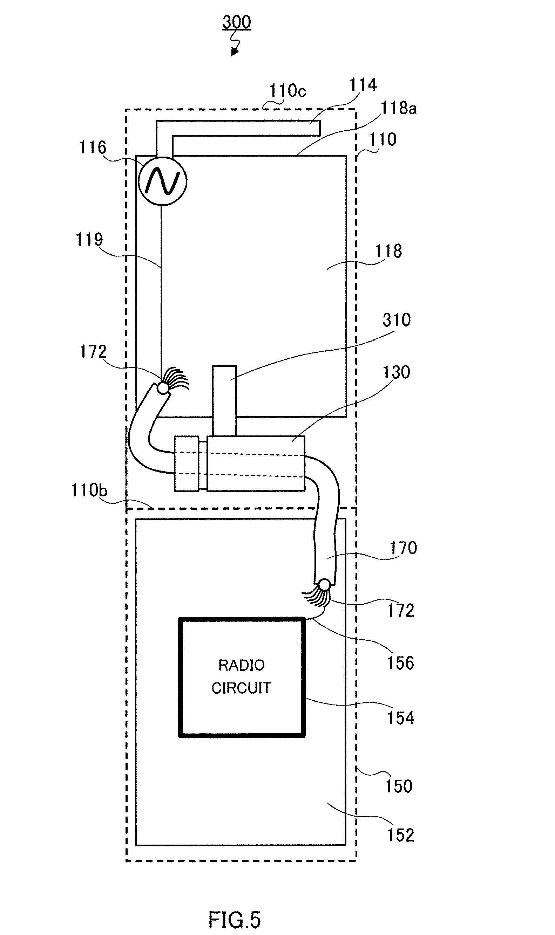

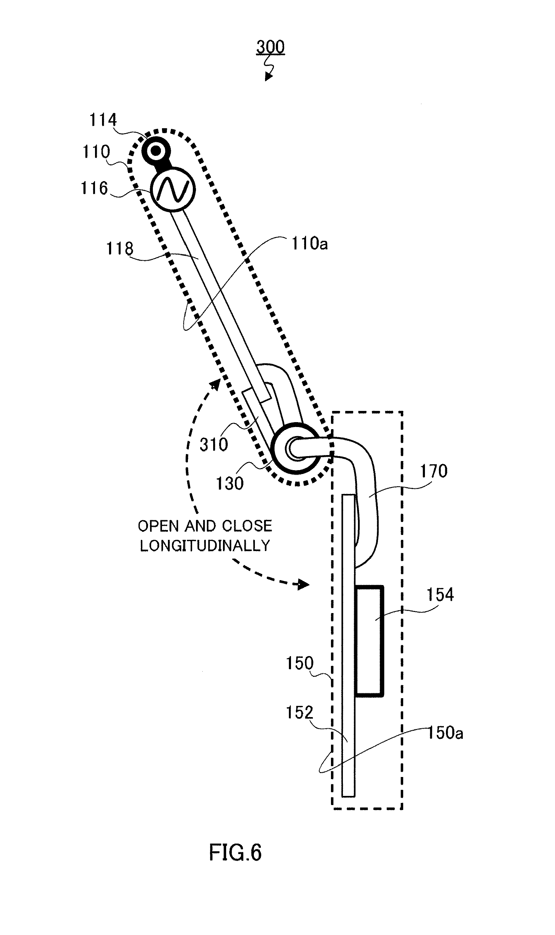

FIG.5 and FIG.6 are schematic views showing a modified example of mobile radio apparatus 200 according to Embodiment 2 of the present invention. FIG. 5 is a front view of the mobile radio apparatus and FIG.6 is a right side view of the mobile radio apparatus.

Mobile radio apparatus 300 shown in FIG.5 and FIG.6 connects rotation axis part 130, through which thin linear coaxial wire group 170 is inserted, with first circuit substrate 118 arranged in first housing 110 in the same configuration as mobile radio apparatus 100.

That is, first housing 110 and second housing 150 are attached foldably and rotatably, and hollow rotation axis part 130, through which thin linear coaxial wire group 170 is inserted, is electrically connected with first circuit substrate 118 of first housing 110 through electrically conductive connecting member 310.

Similar to connecting member 210, connecting member 310 is made of a spring, metal sheet and the like and is bridged between rotation axis part 130 and the ground pattern on first circuit substrate 118 to electrically connect rotation axis part 130 with the ground pattern on first circuit substrate 118.

To be more specific, the supporting part that supports rotation axis part 130 on the first housing 110 side is formed as a hollow member communicating with the interior of first housing 110, and, in this hollow part, one end of connecting member 310 is jointed to the outer surface of rotation axis part 130 and the other end is electrically connected with the ground pattern on first circuit substrate 118.

By this means, mobile radio apparatus 300 provides the same advantage as mobile radio apparatus 200 and, particularly, cylindrical rotation axis part 130 surrounding the periphery of thin linear coaxial wire group 170 serves as the ground, so that it is possible to reduce noise emitting from thin linear coaxial wire group 170.

Further, a configuration may be possible where, in mobile radio apparatus 200 of Embodiment 2, rotation axis part 130 is electrically connected with second circuit substrate 152 of second housing 150 using electrically conductive connecting member 210 and is electrically connected with first circuit substrate 118 of first housing 110 using another electrically conductive connecting member such as connecting member 310.

In this way, it is possible to improve the function of rotation axis part 130 as the ground, and reduce the noise emitting from thin linear coaxial wire group 170 through which rotation axis part 130 is inserted.

### (Embodiment 3)

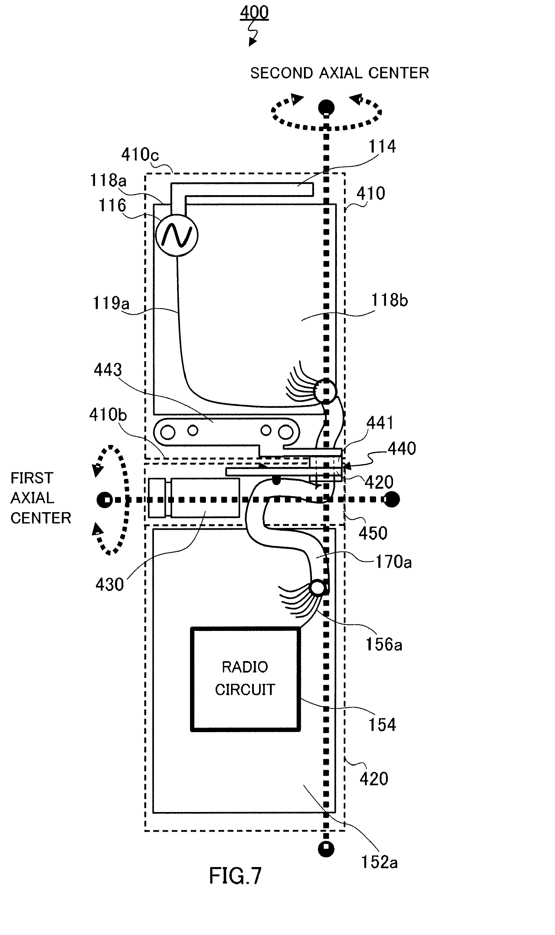

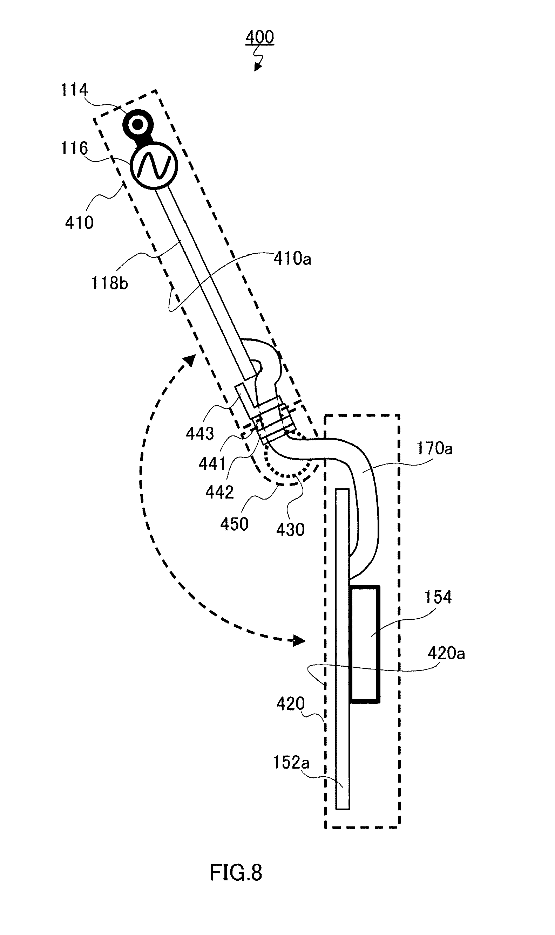

FIG.7 and FIG.8 are schematic views showing main configurations of mobile radio apparatus 400 according to Embodiment 3 of the present invention. FIG.7 is a front view of the mobile radio apparatus and FIG.8 is a right side view of the mobile radio apparatus.

Mobile radio apparatus 400 shown in FIG.7 and FIG.8 has first housing 410, second housing 420 and coupling housing 450 that foldably couples first housing 410 to second housing 420 through first hinge part 430 and second hinge part 440.

FIG.7 and FIG.8 show states of mobile radio apparatus 400 where first housing 410 rotates about first hinge part 430 to open in the longitudinal direction with respect to second housing 420. In this open state, first housing 410 is arranged on second housing 420 from a plan view and is arranged inclining upward from the surface of second housing 420.

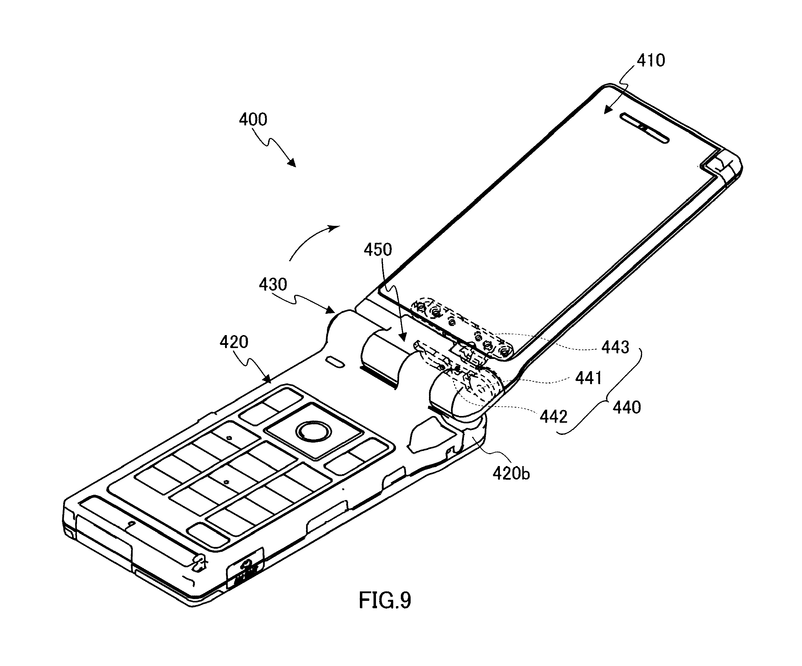

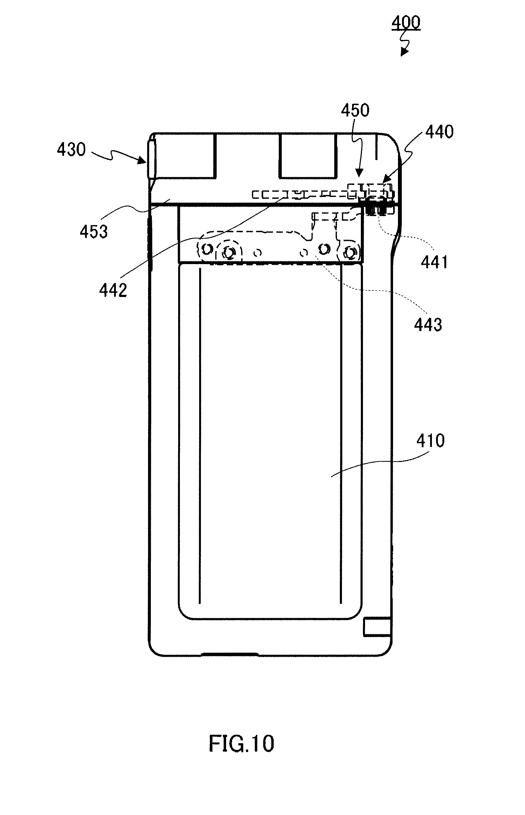

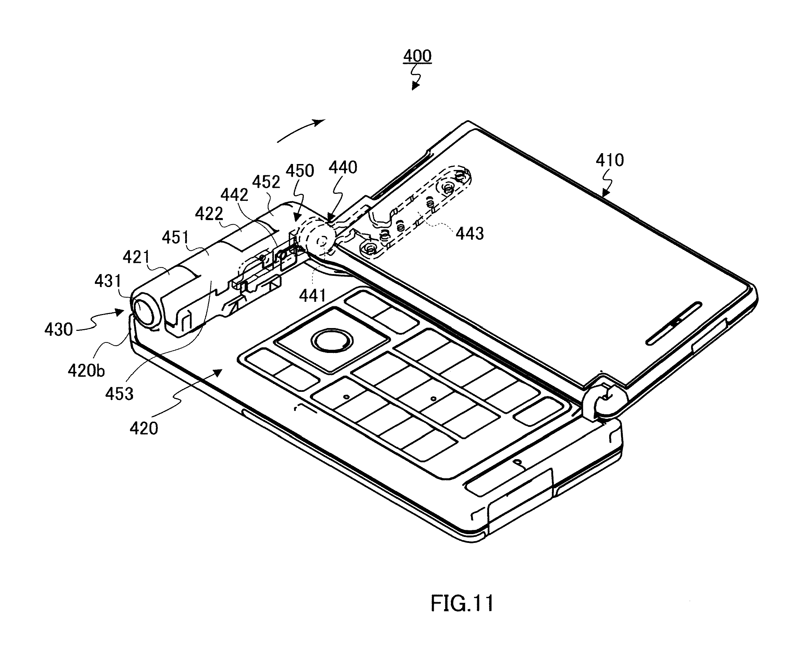

Further, FIG. 9 to FIG.11 are outlookviews showing the operations of opening and closing mobile radio apparatus 400 according to Embodiment 3 of the present invention. FIG.9 is a perspective view of the mobile radio apparatus in the state shown in FIG.8, FIG.10 is a plan view showing the state where the first housing is folded in the mobile radio apparatus and FIG.11 is a perspective view showing the state where the first housing is opened side-hinged with the second hinge part in the mobile radio apparatus. Further, in Embodiment 3, "longitudinal" and "lateral" mean the up and down directions and left and right directions when above mobile radio apparatus 400 is seen from a plan view, and the thickness direction of mobile radio apparatus 400 means the direction orthogonal to "longitudinal" and "lateral."

In this mobile radio apparatus 400, first housing 410 is attached to second housing 420 to open in the lateral direction (see FIG.11) through second hinge part 440 from the folded state (see FIG.10), and to open in the longitudinal direction (see FIG.7 to FIG.9) through first hinge part 430 and coupling housing 450 from the folded state.

First, the coupling relationship between first housing 410 and second housing 420 through coupling housing 450 in mobile radio apparatus 400 will be explained with reference to FIG.11.

First hinge part 430 is arranged on the surface of second housing 420 along one side part 420b (i.e. upper side part) of second housing 420, and coupling housing 450 is pivotally attached on second housing 420 rotatably about the first axis center (see FIG.7) through first axis part 431 of this first hinge part 430.

Here, first hinge part 430 is formed with: cylindrical axis supporting parts 421 and 422 that project in the thickness direction of second housing 420 from the side of one side part 420b on the surface of second housing 420; cylindrical rotating part 451 of coupling housing 450 arranged between cylindrical axis supporting parts 421 and 422; axis end supporting part 452 of a bottomed cylinder that is provided in coupling housing 450 and sandwiches cylindrical axial supporting part 422 with cylindrical rotating part 451; and first axis part 431 that is inserted in cylindrical axis supporting part 422 and cylindrical rotating part 451. Further, cylindrical axis supporting part 422 is a hollow projecting part, and communicates with axis end supporting part 452 and communicates with the interior of the body part of second housing 420.

When first housing 410 is folded over second housing 420, coupling housing 450 is arranged on second housing 420 along one side part 420b (i.e. upper side part) of second housing 420.

Coupling housing 450 has thin, flat coupling body part 453 that is orthogonal to cylindrical rotating part 451 and axis end supporting part 452 forming first hinge part 430, in the direction orthogonal to the rotating axis (i.e. first axis center) of first axis part 431 and that is jointed parallel to the first axis center.

First coupling body 442 of second hinge part 440 is attached to this coupling body part 453. Further, the part of coupling body part 453 jointed with axis end supporting part 452 is hollow, and, in this part, the pivotally-attaching part of second hinge part 440 including axis part 441 (i.e. rotation axis part) is arranged.

Second coupling body 443 pivotally attached to first coupling body 442 in this pivotally-attaching part projects outside from coupling body part 453 and is fixed in first housing 410.

In a state where coupling body part 453 is arranged over second housing 420, this second hinge part 440 moves first housing 410 on second housing 420 foldably over the surface of second housing 420.

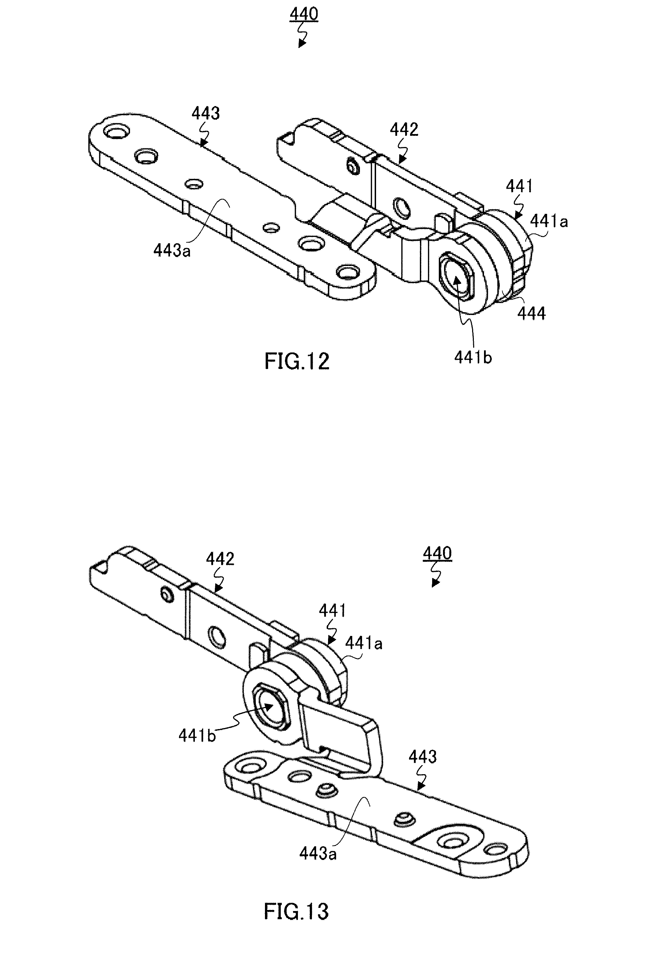

FIG.12 shows the second hinge part in the mobile radio apparatus shown in FIG.10, and FIG.13 shows the second hinge part in the mobile radio apparatus shown in FIG.11.

Second hinge part 440 shown in FIG.12 and FIG.13 couples first housing 410 rotatably to coupling housing 450, and has first coupling body 442 that is attached to coupling housing 450, axis part 441 (i.e. rotation axis part) and second coupling body 443 that is attached rotatably to first coupling body 442 through axis part 441 and that is fixed to first housing 410.

Components of second hinge part 440 are formed by electrically conductive members and made of electrically conductive metal here. Axis part 441 is formed in a cylindrical shape and has flange 441a projecting in a radial pattern in one open rim part.

In flat base parts of first coupling body 442 and second coupling body 443 arranged to face each other across spacer 444, flange 441a is rotatably inserted from the outer surface side to the base part of first coupling part 442 to engage with the outer surface and the front end part of flange 441a is fixed to the base part of second coupling body 443 to form second hinge part 440.

By this means, with second hinge part 440 shown in FIG.12, second coupling body 443 rotates about axis part 441 with respect to first coupling body 442 to arrange front end parts of first coupling body 442 and second coupling body 443 from the positions where they face each other in the rotating axis direction, to positions where they are spaced apart from each other as shown in FIG. 13.

Further, thin linear coaxial wire group 170a is inserted through hollow part 441b of this axis part 441. Furthermore, second coupling body 443 is fixed to first housing 410 in the thickness direction by fixing flat part 443a that is arranged orthogonal to the base part.

First housing 410 is attached to coupling housing 450 through this second hinge part 440 to be rotatable about the second axis center (see FIG.7) with respect to second housing 420.

Further, surface 410a of first housing 410 is provided with a liquid crystal display (not shown) and is rotated together with coupling housing 450 through first hinge part 430 from the state shown in FIG.7 to FIG. 9, is folded and faces surface 420a of second housing 420.

As shown in FIG.7 and FIG.8, first housing 410 accommodates antenna element 114 and first circuit substrate 118b in which antenna power feeding section 116 is mounted and wiring pattern 119 is formed.

Antenna element 114 is arranged in first housing 410 along side part 410c (i.e. upper side part in FIG.7) parallel to base side part 410b coupled to coupling housing 450 through second hinge part 440, and one end of antenna element 114 is connected with antenna power feeding section 116 of first circuit substrate 118. Power (i.e. high frequency voltage) is supplied to antenna element 114 through this antenna power feeding section 116.

First circuit substrate 118b is arranged virtually parallel to the surface of first housing 410 and antenna power feeding section 116 is mounted in side part 118a in the front end. Further, it is also possible to connect the ground of first circuit substrate 118b with an electrically conductive member formed in first housing 110.

In first circuit substrate 118b, antenna power feeding section 116 is arranged on first circuit substrate 118b and is connected with thin linear coaxial wire 172 of thin linear coaxial wire group 170a through wiring pattern 119a wired on first circuit substrate 118b. Further, wiring pattern 119a wired on first circuit substrate 118a may be formed with a microstrip line. This wiring pattern 119a is formed extending to surround the center portion of first circuit substrate 118b arranged in first housing 410, and is connected with thin linear coaxial wire 172 of thin linear coaxial wire group 170a inserted through axis part 441 of second hinge part 440 in one side part of base side part 410b of first circuit substrate 118b.

Similar to above thin linear coaxial wire group 170, thin linear coaxial wire group 170a is formed with a plurality of thin linear coaxial wires of the same radius, and, mainly, connects first circuit substrate 118b of first housing 410 and second circuit substrate 152a of second housing 420. Here, one of thin linear coaxial wires 172 of thin linear coaxial wire group 170a is used to feed power to the antenna.

Further, thin linear coaxial wire 172 that feeds power to the antenna and that is connected with antenna power feeding section 116 is arranged spaced apart from other thin linear coaxial wires which serve as signal lines for specific frequencies (for example, clock signals for liquid crystal display) to prevent deterioration of wireless performance. Further, this thin linear coaxial wire 172 for feeding power to the antenna is arranged adjacent to the ground line connected with the grounds of the first and second circuit substrates. For example, similar to thin linear coaxial wire group 170, a plurality of thin linear coaxial wires are arranged like a plate by aligning them in a direction orthogonal to the direction in which thin linear coaxial wire group 170 extends, and these plates are arranged two-tiered, thereby connecting that thin linear coaxial wire group 170a with radio circuit 154 of second circuit substrate 152a. Thin linear coaxial wire 172 positioned in the end of a plurality of thin linear coaxial wires is the thin linear coaxial wire for feeding power to the antenna and the thin linear coaxial wire adjacent to the thin linear coaxial wire for feeding power to the antenna is the ground line. Further, it is preferable to use the thin linear coaxial wire arranged at the position farthest from the thin linear coaxial wire for feeding power to the antenna as the signal line for a specific frequency.

Further, a structure is possible where the individual outer conductors of thin linear coaxial wire group 170a and thin linear coaxial wires 172 are connected with one electrically conductive member, have uniform potential and are connected with the substrate grounds through this electrically conductive member.

Thin linear coaxial wire group 170a configured in this way is inserted through the hollow cylindrical rotation axis part 441 in second hinge part 440 to pass inside coupling housing 450 and extend into second housing 420.

In this way, thin linear coaxial group 170a is arranged across first housing 410 and second housing 420.

On the other hand, second housing 420 accommodates second circuit substrate 152a virtually parallel to surface 420a, and radio circuit 154 is mounted in second circuit substrate 152a.

Radio circuit 154 is connected with each electronic component mounted in second circuit substrate 152a and is connected with each electronic component mounted in first circuit substrate 118b through thin linear coaxial wire group 170a, and has radio transmitting/receiving functions and the like.

Particularly, radio circuit 154 is connected with thin linear coaxial wire 172 connected with wiring pattern 119a in thin linear coaxial wire group 170a through wiring pattern 156a wired on second circuit substrate 152a, and supplies power (i.e. high frequency current) to antenna power feeding section 116 through this thin linear wire 172. Further, wiring pattern 156a wired on second circuit substrate 152a may be formed with a microstrip line.

In mobile radio apparatus 400 configured in this way, thin linear coaxial wire group 170a is inserted through axis part 441 of second hinge part 440 to pass coupling housing 450 to electrically connect first circuit substrate 118a of first housing 410 and second circuit substrate 152a of second housing 420. Consequently, thanks to first hinge part 430 and second hinge part 440, thin linear coaxial wire group 170 does not twist due to the opening and closure of first housing 410 and second housing 420 through coupling housing 450.

Further, one thin linear coaxial wire in thin linear coaxial wire group 170a is used as antenna power feeding thin linear coaxial wire 172 and, consequently, it is not necessary to bridge between first housing 410 and second housing 420 a coaxial cable for feeding power to the antenna through coupling housing 450 as a separate line from the signal line connecting first circuit substrate 118b and second circuit substrate 152a, so that it is possible to make the hollow part in second hinge part 440 smaller.

Further, the individual outer conductors of thin linear coaxial wire group 170a and thin linear coaxial wires 172 are connected through the electrically conductive member, thereby making their potentials uniform and are connected with the ground, so that it is possible to improve connection with the ground and reduce loss of a specific frequency.

Consequently, in mobile radio apparatus 400 that has housings which are foldable pivotally around the first axis center and the second axis center through second hinge part 440, because antenna 114 and radio circuit 154 for supplying power to the antenna are arranged in first housing 410 and second housing 420, respectively, it is possible to design the layout easily without arranging antenna 114 and radio circuit 154 in the same housing.

That is, by arranging an antenna and a radio circuit for supplying power to the antenna in separate housings, it is possible to improve the flexibility of the layout design of the antenna and the radio circuit and save space. Consequently, it is possible to make first housing 410 and second housing 420 lighter and smaller.

Further, with mobile radio apparatus 400, it is more suitable to use second hinge part 440 as the ground, through which thin linear coaxial wire group 170a is inserted, and improve the shield of thin linear coaxial wire group 170a, particularly, thin linear coaxial wire 172.

### (Embodiment 4)

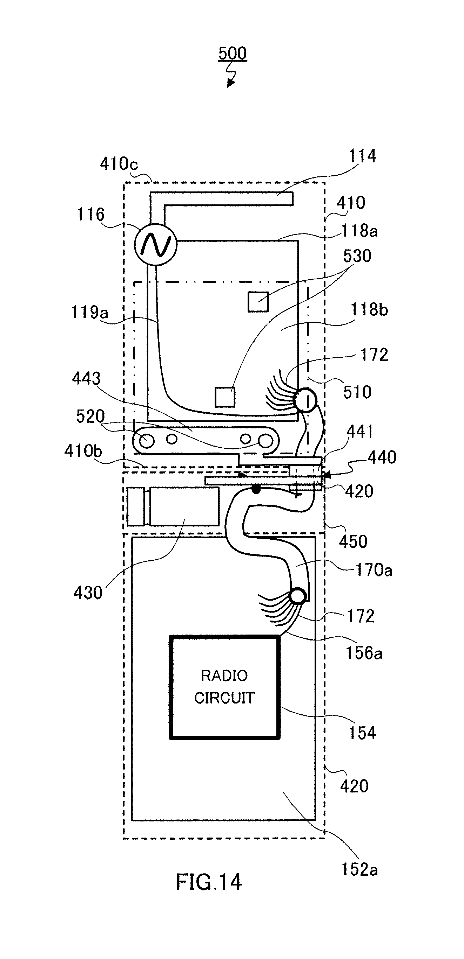

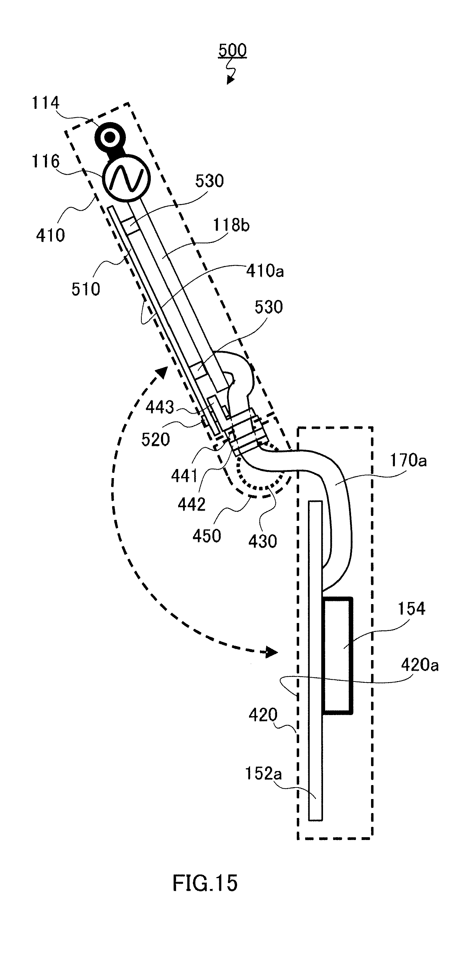

FIG.14 and FIG.15 are schematic views showing main configurations of mobile radio apparatus 500 according to Embodiment 4 of the present invention. FIG.14 is a front view of the mobile radio apparatus and FIG.15 is a right side view of the mobile radio apparatus.

Further, mobile radio apparatus 500 of this Embodiment 4 has the same basic configuration as corresponding mobile radio apparatus 400 of Embodiment 3 shown in FIG.7 to FIG.13, and the same components will be assigned the same reference numerals and explanation thereof will be omitted.

Mobile radio apparatus 500 shown in FIG.14 and FIG.15 employs a configuration where, in the configuration of mobile radio apparatus 400, at least one of the circuit substrates accommodated in first housing 410 and second housing 420 are electrically connected with axis part 441 through which thin linear coaxial wire group 170a is inserted.

Here, first housing 410 is attached to coupling housing 450 rotatably in the lateral direction, and second hinge part 440 that has cylindrical axis part 441, through which thin linear coaxial wire group 170a is inserted, is electrically connected with an electrically conductive plate accommodated in first housing 410.

To be more specific, in the same configuration of mobile radio apparatus 400, mobile radio apparatus 500 has, in first housing 410, metal plate part 510 (i.e. electrically conductive plate), which is arranged to face first circuit substrate 118b and to which second coupling body 443 of second hinge part 440 is fixed.

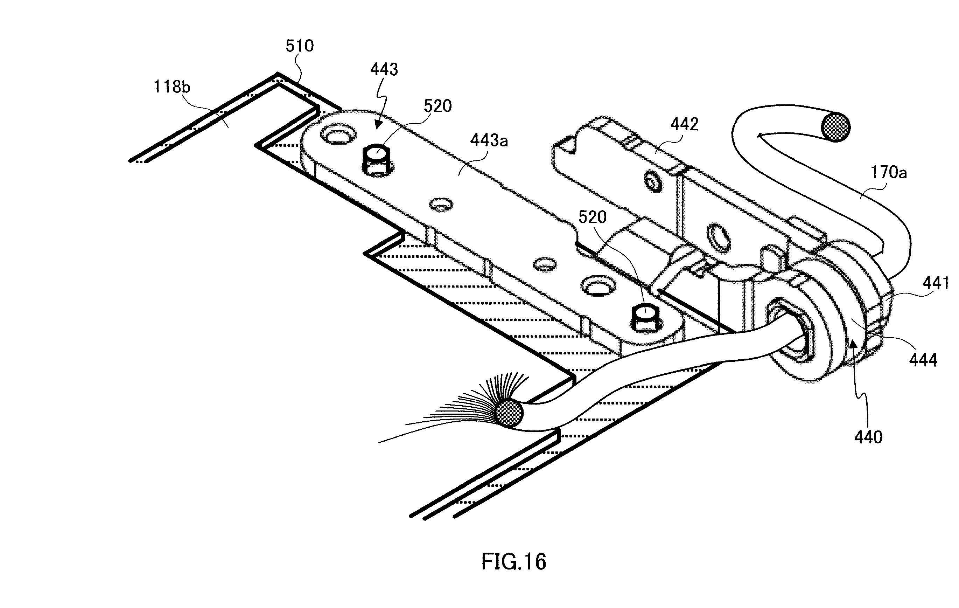

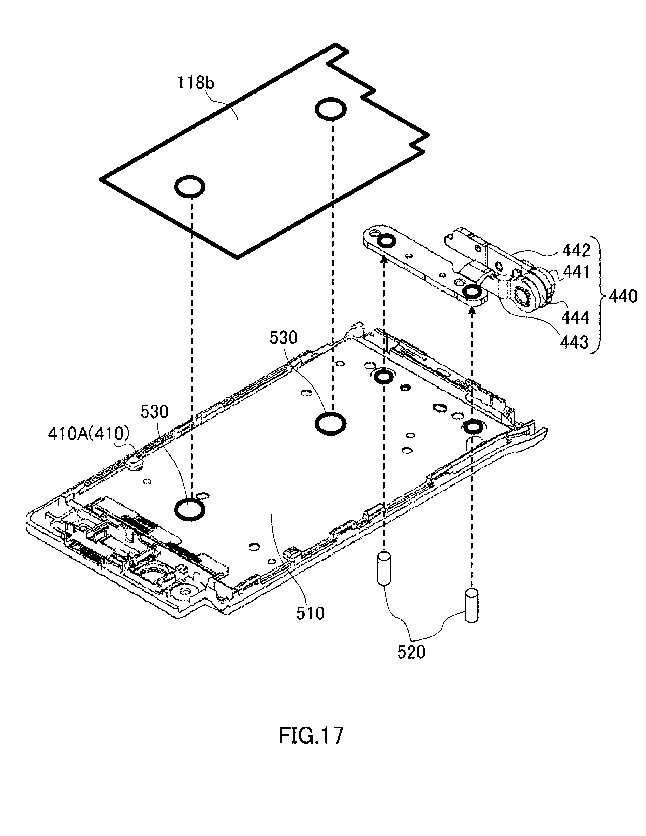

FIG.16 shows the relationship between the metal plate and a second hinge part with the axis part in mobile radio apparatus 500 according to Embodiment 4 of the present invention, and FIG.17 is an exploded view showing the interior of the first housing. Further, FIG.17 shows the state of first housing 410 where the cover on the back surface side of first housing 410 is taken off for ease of explanation.

As shown in FIG.16, in second hinge part 440 in which first coupling body 442 is fixed to coupling housing 450, second coupling body 443 is projected from the coupling housing 450 side and is fixed through electrically conductive fastening member 520 in a state where fixing flat part 443a contacts, through its surface, metal plate 510 laid in first housing 410.

As shown in FIG.17, metal plate 510 is laid across virtually the entire surface of the inner bottom surface of disassembled housing 410A that has surface 410 as the bottom surface.

In the surface of metal plate 510 in this disassembled housing 410A, second coupling body 443 is electrically connected with the portion of the base side part through electrically conductive fixing members 520 such as screws, and first circuit substrate 118b is overlaid in the rest of the surface of this disassembled housing 410A.

This first circuit substrate 118b electrically connects the ground of the substrate with metal plate 510 through electrically conductive member 530.

Electrically conductive member 530 is formed with, for example, an elastic deformable member such as a leaf spring, and is electrically connected with first circuit substrate 118b that is placed upon electrically conductive member 530 in first housing 410 in a state where electrically conductive member 530 and first circuit substrate 118b press against each other. Further, although the number of electrically conductive members 530 is two, one electrically conductive member is also sufficient. Further, the connection positions are not limited to the above.

Thanks to this configuration, electrically conductive axis part 441, through which thin linear coaxial group 170a is inserted, is electrically connected with first circuit substrate 118a through second coupling body 443, fastening member 520, metal plate 510 and electrically conductive member 530.

By this means, second hinge part 430 (to be more specific, axis part 441) is electrically connected with the ground of first circuit substrate 118b.

Mobile radio apparatus 500 provides the same advantage as mobile radio apparatus 400 and second hinge part 430 that includes cylindrical axis part 441 surrounding the periphery of thin linear coaxial wire group 170a serves as the ground, so that it is possible to reduce the noise emitting from thin linear coaxial wire group 170a.

Further, although each of the above embodiments is configured with one antenna element 114, the present invention is not limited to this, and the mobile radio apparatus may be configured to have a plurality of antenna elements and use thin linear coaxial wire groups 170 and 170a as power feeding lines for feeding power to antenna power feeding sections associated with these antenna elements 114.

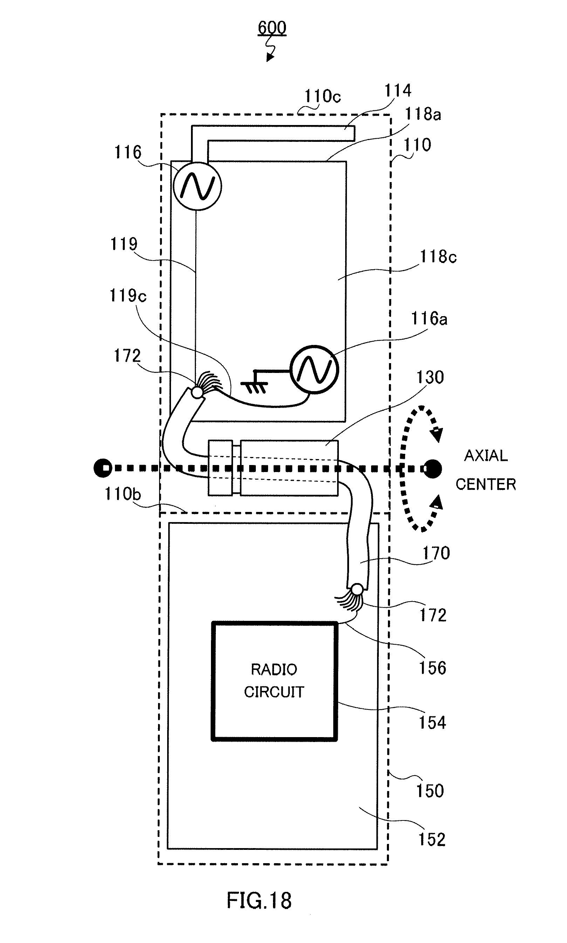

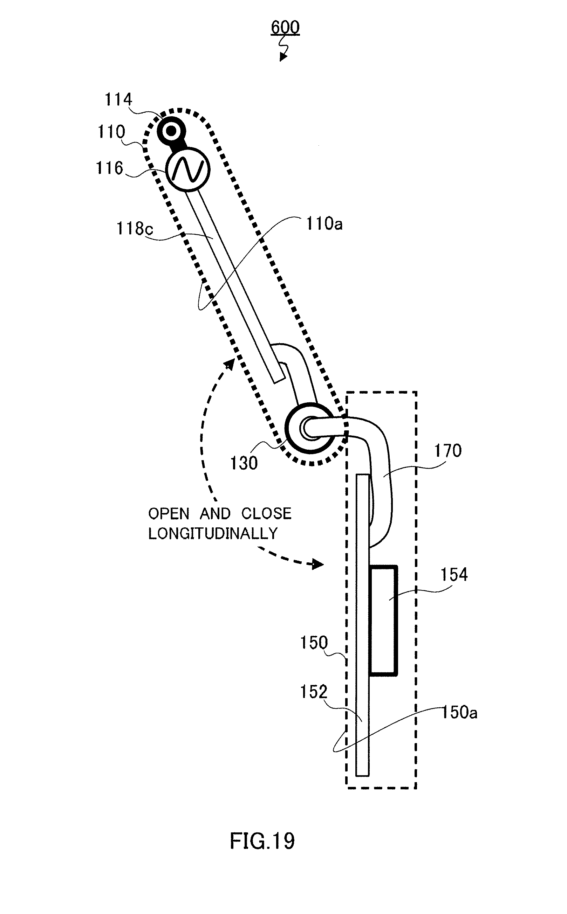

FIG.18 and FIG.19 are schematic views showing an example of main configurations of a mobile radio apparatus with a plurality of antenna elements. FIG.18 is a front view of the mobile radio apparatus and FIG.19 is a right side view of the mobile radio apparatus.

Further, mobile radio apparatus 600 shown in FIG.18 has the same basic configuration as corresponding mobile radio apparatus 100 of Embodiment 1 shown in FIG. 1, and the same components will be assigned the same reference numerals and explanation thereof will be omitted.

Mobile radio apparatus 600 shown in FIG. 18 employs a configuration where first circuit substrate 118c, on which a plurality of antenna power feeding sections (antenna power feeding section 116 and 116a) are mounted, is used instead of first circuit substrate 118 in the configuration of mobile radio apparatus 100.

Thin linear coaxial wire 170 connected with, for example, radio circuit 154 of second housing 150 through rotation axis part 130 is connected with antenna power feeding sections 116 and 116a through wiring patterns 119 and 119c of first circuit substrate 118c of first housing 110. By this means, it is possible to feed power to antenna power feeding sections 116 and 116a from radio circuit 154 and realize the same advantage as in mobile radio apparatus 100 based on the number antenna elements.

Further, a plurality of antenna power feeding sections matching antenna elements in number may be provided in mobile radio apparatuses 200, 300, 400 and 500. That is, a plurality of antenna power feeding sections 116 and 116a are provided in first housings 110 and 410 of mobile radio apparatuses 200, 300, 400 and 500. Power is fed to these antenna power feeding sections 116 and 116a from radio circuit 154 provided in second housings 150 and 420 attached foldably to first housings 110 and 410 using thin linear coaxial wires 170 and 170a that are inserted through rotation axis part 130 and axis part 441.

Further, in mobile radio apparatuses 100, 200, 300, 400 and 500 of the above embodiments and modified examples, the lengths from antenna power feeding sections 116 and 116a to radio circuit 154 are determined by changing the length of thin linear coaxial wire 172 according to the frequency band of the antenna. For example, the lengths from antenna power feeding sections 116 and 116a to radio circuit 154 is an integral multiple of λ/8 of the frequency that is used. Here, in mobile radio apparatuses 100, 200, 300, 400 and 500, a GPS antenna is used for the antenna and the lengths from antenna power feeding sections 116 and 116a to radio circuit 154 are 3/8 λ. Further, the thin linear coaxial wire group uses AWG44 and the external diameter of one thin linear coaxial wire is 0.25 millimeters.

Further, the above present invention can be variously modified without departing from the spirit of the present invention, and it naturally follows that the present invention covers such modifications.

The disclosure of Japanese Patent Application No.2007-284329, filed on October 31, 2007, including the specification, drawings and abstract, is incorporated herein by reference in its entirety.

### Industrial Applicability

The mobile radio apparatus according to the present invention provides an advantage of improving the flexibility of the layout design of an antenna and a radio circuit by arranging the antenna and the radio circuit for supplying power to the antenna in separate housings and saving space, and is useful as a mobile radio apparatus in flip mobile telephones and the like.

## Claims

1. A mobile radio apparatus comprising:
a first housing that comprises:
an antenna element;
a power feeding section that feeds power to the antenna element; and
a first circuit substrate;
a second housing that comprises a second circuit substrate on which a radio circuit section is mounted;
a hollow rotation axis part that is electrically conductive and that couples the first housing and the second housing rotatably;
an electrically conductive connecting member that electrically connects at least one of ground patterns of the first and second circuit substrates with the rotation axis part; and
a plurality of thin linear coaxial wires that are inserted through the rotation axis part and that electrically connect the first circuit substrate and the second circuit substrate,
wherein at least one of the thin linear coaxial wires is a power feeding line that electrically connects the power feeding section and the radio circuit.

2. A mobile radio apparatus comprising:
a first housing that comprises:
an antenna element;
a power feeding section that feeds power to the antenna element; and
a first circuit substrate;
a second housing that comprises a second circuit substrate on which a radio circuit section is mounted;
a coupling housing that is arranged between the first housing and the second housing;
a hinge part that couples the second housing and the coupling housing to be rotatable about a first axis center;
a hollow rotation axis part that is electrically conductive and that couples a first coupling body which is fixed to the coupling housing and a second coupling body which is fixed to the first housing, to be rotatable about a second axis center which is vertical with respect to the first axis center;
an electrically conductive connecting member that electrically connects at least one of ground patterns of the first and second circuit substrates with the rotation axis part; and
a plurality of thin linear coaxial wires that are inserted through the rotation axis part and that electrically connect the first circuit substrate and the second circuit substrate through the coupling housing,
wherein at least one of the thin linear coaxial wires is a power feeding line that electrically connects the power feeding section and the radio circuit.

3. The mobile radio apparatus according to claim 1, wherein:
the first housing comprises a plurality of antenna elements; and
the plurality of thin linear coaxial wires are used as power feeding lines matching the antenna elements in number.

4. The mobile radio apparatus according to claim 1, wherein:
the first housing comprises a plurality of antenna elements; and
the plurality of thin linear coaxial wires are used as power feeding lines matching the antenna elements in number.
